# EUROPÄISCHE PATENTSCHRIFT

(11) **EP 2 769 067 B1**
(45) Veröffentlichungstag und Bekanntmachung des Hinweises auf die Patenterteilung: **25.03.2015**
(21) Anmeldenummer: 12756113.2
(22) Anmeldetag: 05.09.2012
(51) Int. Cl.: F02B 29/04, F02M 35/10, F01M 13/04

(54) **ANSAUGMODUL FÜR EINE VERBRENNUNGSKRAFTMASCHINE**
INTAKE MODULE FOR AN INTERNAL COMBUSTION ENGINE
MODULE D'ASPIRATION POUR UN MOTEUR À COMBUSTION INTERNE

(30) Priorität: 18.10.2011 DE 102011116299
(43) Veröffentlichungstag der Anmeldung: 27.08.2014
(73) Patentinhaber: Daimler AG, 70327 Stuttgart (DE)
(72) Erfinder: HÄFNER, Jochen, 73547 Lorch (DE); JECKER, Cecile, 73730 Esslingen (DE)
(74) Vertreter: JENSEN & SON
(86) Internationale Anmeldenummer: PCT/EP2012/003710
(87) Internationale Veröffentlichungsnummer: WO 2013/056763

(56) Entgegenhaltungen:
- EP-A1- 0 448 431
- EP-A1- 0 471 886
- EP-A2- 1 182 343

## Beschreibung

Die EP 1.182.343 A2 betrifft ein Ansaugmodul für eine Verbrennungskraftmaschine gemäß dem Oberbegriff von Patentanspruch 1.

Die DE 37 30817 C2 offenbart eine Zylinderkopfhaube mit Saugrohranlage für eine Brennkraftmaschine der Viertakt-Hubkolben-Bauart, die eine Baueinheit bilden. Die Zylinderkopfhaube dieser Baueinheit ist unter Vermittlung einer Dichtung von Schrauben an einem Zylinderkopf der Brennkraftmaschine gehalten. Dabei ist vorgesehen, dass die Schrauben in Köpfe koaxial angeordneter Befestigungsschrauben eingedreht sind, die den mehrteiligen Zylinderkopf in Lage halten.

Der DE 10 2009 020 100 A1 ist ein Zylinderkopf für eine Verbrennungskraftmaschine mit einer über eine Dichtfläche mit dem Zylinderkopf verbundenen Zylinderkopfhaube als bekannt zu entnehmen. Es ist ein Saugmodul sowie ein Abgasmodul vorgesehen, welche jeweils über eine korrespondierende Dichtflanschfläche mit dem Zylinderkopf verbunden sind. Die Dichtfläche zwischen dem Zylinderkopf und der Zylinderkopfhaube ist dabei in die jeweilige Dichtflanschfläche des Saugmoduls und/oder des Abgasmoduls integriert.

Darüber hinaus ist es aus dem Serienbau von Verbrennungskraftmaschinen bekannt, dass eine nicht unerhebliche Anzahl an Komponenten der Verbrennungskraftmaschine von Nöten ist, um einen effizienten und emissionsarmen Betrieb der Verbrennungskraftmaschine zu ermöglichen. Diese Vielzahl an Komponenten erfordert eine aufwändige Montage, was zu einer zeit- und kostenaufwändigen Montage der gesamten Verbrennungskraftmaschine führt.

Es ist daher Aufgabe der vorliegenden Erfindung, ein Ansaugmodul für eine Verbrennungskraftmaschine, insbesondere eines Kraftwagens, bereitzustellen, durch welches die Montagekosten der Verbrennungskraftmaschine besonders gering gehalten werden können.

Diese Aufgabe wird durch ein Ansaugmodul für eine Verbrennungskraftmaschine, insbesondere eines Kraftwagens, mit den Merkmalen des Patenanspruchs 1 gelöst. Vorteilhafte Ausgestaltungen mit zweckmäßigen und nicht-trivialen Weiterbildungen der Erfindung sind in den übrigen Ansprüchen angegeben.

Ein solches Ansaugmodul für eine Verbrennungskraftmaschine, insbesondere eines Kraftwagens, umfasst wenigstens ein Luftleitelement, über welches der Verbrennungskraftmaschine Luft zuzuführen ist. Das Ansaugmodul umfasst ferner eine mit dem Luftleitelement verbundene Zylinderkopfhaube, mittels welcher ein Zylinderkopf der Verbrennungskraftmaschine zumindest teilweise abzudecken ist.

Erfindungsgemäß ist in das Ansaugmodul eine Schmiermittelabscheideinrichtung und eine Kühleinrichtung zur Kühlung der Luft integriert. Dies bedeutet, dass das Luftleitelement, die Zylinderkopfhaube, die Schmiermittelabscheideinrichtung und die Kühleinrichtung ein Modulteil in Form des Ansaugmoduls bilden und als das Ansaugmodul auf besonders zeitund kostengünstige Weise an der Verbrennungskraftmaschine und über diese an dem übrigen Kraftwagen montiert werden können.

Das Ansaugmodul kann als das Modulbauteil zeitlich zumindest teilweise parallel zur Fertigung der übrigen Verbrennungskraftmaschine vormontiert und als vormontiertes Ansaugmodul an der Verbrennungskraftmaschine montiert werden. Mit der Montage des Ansaugmoduls geht die Montage des Luftleitelements, der Zylinderkopfhaube, der Schmiermittelabscheideeinrichtung und der Kühleinrichtung zeitgleich einher. Daraus ist es ersichtlich, dass zusätzliche zeit- und kostenaufwändige Montageschritte zur separaten Montage der Schmiermittelabscheideinrichtung, der Zylinderkopfhaube und der Kühleinrichtung nicht vorgesehen und nicht von Nöten sind.

Das erfindungsgemäße Ansaugmodul weist aufgrund seines modularen Aufbaus auch eine vorteilhafte Prüfbarkeit hinsichtlich einer gewünschten Funktion des Ansaugmoduls auf. Mit anderen Worten können die Komponenten des Ansaugmoduls, d.h. zumindest das Luftleitelement, die Zylinderkopfhaube, die Schmiermittelabscheideeinrichtung und die Kühleinrichtung in ihrem Zusammenwirken auf eine gewünschte Funktionalität überprüft werden. Eine separate Überprüfung der Komponenten ist nicht vorgesehen und nicht von Nöten. Dies hält den Zeit- und Kostenaufwand zur Durchführung der Überprüfung der Funktionalität bzw. Funktionserfüllung des Ansaugmoduls gering. Infolge der sehr geringen Einzelteilezahl des erfindungsgemäßen Ansaugmoduls ist auch eine sehr einfache logistische Handhabung realisiert. Das erfindungsgemäße Ansaugmodul weist auch einen sehr geringen Bauraumbedarf sowie ein geringes Gewicht auf infolge der Integration der Komponenten in das Ansaugmodul.

Ein weiterer Vorteil ist, dass das Ansaugmodul nur sehr geringe Toleranzen aufgrund einer nur sehr geringen Anzahl an Schnittstellen aufweist. Ferner kann auch die Anzahl an äußeren, d.h. von außen an das Ansaugmodul anzuschließenden Leitungen gering gehalten werden. Dies führt wiederum zu einem geringen Gewicht sowie zur Lösung und/oder zur Vermeidung von Package-Problemen, insbesondere in einem platzkritischen Bereich wie in einem Motorraum des beispielsweise als Personenkraftwagen ausgebildeten Kraftwagens.

Die Schmiermittelabscheideeinrichtung dient dazu, Schmiermittel, insbesondere Öl, von einem Schmiermittel-Luft- bzw. Schmiermittel-Gas-Gemisch abzuscheiden. Die Schmiermittelabscheideeinrichtung kann dabei beispielsweise im Rahmen einer Kurbelgehäuseentlüftung der Verbrennungskraftmaschine verwendet werden, bei welcher sogenanntes Blow-by-Gas aus einem Kurbelgehäuse der Verbrennungskraftmaschine abgeführt wird. Das Blow-by-Gas ist dabei zumindest im Wesentlichen durch das Schmiermittel-Luft- bzw. Schmiermittel-Gas-Gemisch aus Schmiermittel und Gas aus dem Kurbelgehäuse gebildet. Im Rahmen der Kurbelgehäuselüftung wird dabei der Gas- bzw. Luftanteil des Blow-by-Gases auf die Luftseite der Verbrennungskraftmaschine zurückgeführt. Dabei ist es unerwünscht, auch den Schmiermittelanteil des Blow-by-Gases auf die Luftseite zurückzuführen. Um dies zu vermeiden ist die Schmiermittelabscheideeinrichtung vorgesehen, welche den Schmiermittelanteil zumindest überwiegend vom Gasanteil des Blow-by-Gases abscheidet, so dass zumindest im Wesentlichen nur der Gasanteil auf die Luftseite der Verbrennungskraftmaschine und in wenigstens einen Brennraum der Verbrennungskraftmaschine geführt werden kann. Dies hält die Emissionen der Verbrennungskraftmaschine besonders gering.

Die Kühleinrichtung fungiert beispielsweise als Ladeluftkühler zur Kühlung der mittels eines Verdichters eines Abgasturboladers verdichteten Luft. Durch die Kühlung der verdichteten und dadurch erwärmten Luft kann der Aufladegrad des Motors gesteigert werden. So kann die Verbrennungskraftmaschine besonders effizient und damit kraftstoffverbrauchsgünstig betrieben werden.

Daraus ist es ersichtlich, dass das erfindungsgemäße Ansaugmodul eine sehr hohe Funktionsintegration aufweist. Die Rückführung des Blow-by-Gases auf die Luftseite und somit in einen Ansaugtrakt der Verbrennungskraftmaschine ist dabei besonders einfach, da sich Steuer- bzw. Regelelemente zum Steuern bzw. Regeln der Rückführung in besonders enger Nähe zu einer Entnahmestelle, an der das Blow-by-Gas entnommen wird, sowie zu einer Rückführstelle, an welcher das Blow-by-Gas bzw. dessen Gasanteil eingeleitet wird, befinden können. Die Entnahmestelle ist dabei beispielsweise in einem Schmiermittel- bzw. Ölraum des Zylinderkopfs angeordnet. Die Rückführstelle befindet sich bevorzugt in Strömungsrichtung der Luft stromab der Kühleinrichtung (Ladeluftkühler) bzw. in einer Reinluftleitung zum Abgasturbolader.

Bei einer vorteilhaften Ausführungsform der Erfindung sind eine erste Verbindungsflanschfläche des Luftleitelements, über welche das Luftleitelement mit dem Zylinderkopf zu verbinden ist, und eine zweite Verbindungsflanschfläche der Zylinderkopfhaube, über welche die Zylinderkopfhaube mit dem Zylinderkopf zu verbinden ist, zumindest im Wesentlichen in einer gemeinsamen Ebene angeordnet. Dadurch kann das erfindungsgemäße Ansaugmodul besonders einfach montiert sowie besonders einfach und damit zeit- und kostengünstig gefertigt werden. Entsprechend dazu sind eine dritte, mit der ersten Verbindungsflanschfläche korrespondierende Verbindungsflanschfläche sowie eine vierte, mit der zweiten Verbindungsflanschfläche korrespondierenden Verbindungsflanschfläche des Zylinderkopfes ebenso zumindest im Wesentlichen in einer gemeinsamen Ebene angeordnet. Dadurch kann das Ansaugmodul ohne aufwändige Adapterelemente an dem Zylinderkopf montiert werden. Eine besonders einfache Montage des erfindungsgemäßen Ansaugmoduls ist bei einem solchen Zylinderkopf gegeben, bei welchem die dritte Verbindungsflanschfläche in die vierte Verbindungsflanschfläche (bzw. umgekehrt) integriert ist.

In weiterer vorteilhafter Ausgestaltung umfasst das Luftleitelement einen Luftverteiler, mittels welchem die Luft auf eine Mehrzahl von Brennräumen, insbesondere Zylindern, der Verbrennungskraftmaschine aufteilbar ist. Der Luftverteiler weist beispielsweise einen Sammelraum auf, in welchem die beispielsweise verdichtete und der Verbrennungskraftmaschine zuzuführende Luft zunächst gesammelt wird. Von dem Sammelraum zweigt eine Mehrzahl von mit den Brennräumen korrespondierenden Luftkanälen ab, in welche die beispielsweise verdichtete Luft von dem Sammelraum einströmen kann und von welchen die Luft in die Brennräume einströmen kann. Dadurch ist eine besonders hohe Funktionsintegration des Ansaugmoduls geschaffen.

Als weiterhin vorteilhaft hat es sich gezeigt, wenn die Kühleinrichtung in einem teilweise durch das Luftleitelement und teilweise durch die Zylinderkopfhaube begrenzten Aufnahmeraum angeordnet ist. Mit anderen Worten sind die Zylinderkopfhaube und das Luftleitelement unter Ausbildung des Aufnahmeraums miteinander verbunden, wobei die Kühleinrichtung in dem Aufnahmeraum angeordnet ist. Dadurch ist der Aufnahmeraum auf einfache, kostengünstige Weise mit einer nur geringen Teileanzahl geschaffen, was den Bauraumbedarf und die Kosten des Ansaugmoduls gering hält.

Bei einer weiteren vorteilhaften Ausführungsform der Erfindung ist wenigstens eine Luftleitung, über welche der Verbrennungskraftmaschine Luft zuführbar ist, teilweise durch das Luftleitelement und teilweise durch die Zylinderkopfhaube begrenzt. Dies führt zu einer besonders kostengünstigen und kompakten Ausgestaltung des Ansaugmoduls.

Vorzugsweise ist die Kühleinrichtung in das Ansaugmodul, insbesondere in den Aufnahmeraum, eingeschoben. So kann die Kühleinrichtung zeit- und kostengünstig montiert werden, woraus eine zeit- und kostengünstige Montage der gesamten Verbrennungskraftmaschine resultiert. Dies kann sowohl in Längs- als auch in einer Querrichtung bezogen auf die Haupterstreckungsrichtung der Kühleinrichtung erfolgen.

In einer besonders bevorzugten Ausführungsform werden Teile des Gehäuses, insbesondere das Gehäuseoberteil mit dem Gehäuseunterteil durch eine Verschraubung und/oder eine Verschweißung, und/oder eine Verklebung und/oder eine Vernietung miteinander verbunden, und/oder diese Teile sind zumindest teilweise einstückig miteinander ausgeführt. Durch diese Verbindungstechnologien kann eine besonders dauerhaft dichte und leichte Verbindung der Gehäuseteile miteinander erreicht werden. Insbesondere zur Verbindung von aus Kunststoffen hergestellten Gehäuseteilen kann bei Verschweißung dieser Teile auf metallische Verbindungselemente zumindest teilweise verzichtet werden. Somit kann das Gesamtgewicht der Anordnung klein gehalten werden.

Zur Erfindung gehört auch eine Verbrennungskraftmaschine mit einem erfindungsgemäßen Ansaugmodul. Die Verbrennungskraftmaschine umfasst dabei einen Zylinderkopf, an welchem das erfindungsgemäße Ansaugmodul beispielsweise mittels Schrauben gehalten ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines Ansaugmoduls für eine als Hubkolben-Verbrennungskraftmaschine ausgebildete Verbrennungskraftmaschine, mit einem Luftleitelement, einer Zylinderkopfhaube, einem Ölabscheider und einem Ladeluftkühler, welche in das Ansaugmodul integriert sind; und
- Fig. 2: eine schematische Schnittansicht des Ansaugmoduls gemäß Fig. 1.

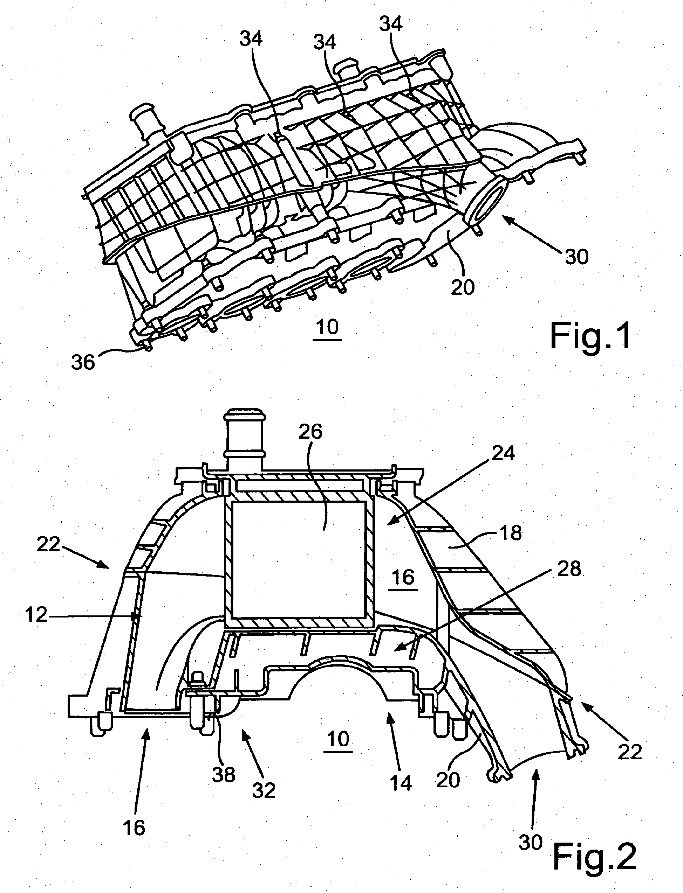

Die Fig. 1 zeigt ein Ansaugmodul 10 für eine als Hubkolben-Verbrennungskraftmaschine ausgebildete Verbrennungskraftmaschine eines Kraftwagens, insbesondere eines Personenkraftwagens. Wie in Zusammenschau mit der Fig. 2 erkennbar ist, umfasst das Ansaugmodul 10 ein Luftleitelement 12, mittels welchem der Verbrennungskraftmaschine Luft zuzuführen ist. Das Luftleitelement 12 wird daher auch als Saugrohr bezeichnet, da die Verbrennungskraftmaschine über das Luftleitelement Luft ansaugen kann.

Das Ansaugmodul 10 umfasst ferner eine Zylinderkopfhaube 14, mittels welcher ein Zylinderkopf der Verbrennungskraftmaschine zumindest teilweise abzudecken ist und welche einstückig mit dem Luftleitelement 12 ausgebildet ist. Dem Luftleitelement 12 sind Luftkanäle 16 zugeordnet, über die die Luft in Zylinder der Verbrennungskraftmaschine strömen kann und welche einerseits durch ein Gehäuseoberteil 18 des Ansaugmoduls 10 und andererseits durch ein Gehäuseunterteil 20 des Ansaugmoduls 10 teilweise begrenzt sind. Durch das Gehäuseunterteil 20 ist dabei die Zylinderkopfhaube 14 gebildet.

Wie den Fig. 1 und 2 zu entnehmen ist, sind das Gehäuseoberteil 18 und das Gehäuseunterteil 20 über jeweilige Verbindungsflansche 22 unter Ausbildung eines Aufnahmeraums 24 miteinander verbunden. Mit anderen Worten ist der Aufnahmeraum 24 teilweise durch das Luftleitelement 12 und teilweise durch die Zylinderkopfhaube 14 begrenzt. Durch das Gehäuseunterteil 20 ist sowohl die Zylinderkopfhaube 14 als auch ein Gehäuse zur Aufnahme des Ladeluftkühlers 26 teilweise gebildet.

In dem Aufnahmeraum 24 ist dabei ein Ladeluftkühler 26 angeordnet, mittels welchem die der Verbrennungskraftmaschine zuzuführende und mittels eines Verdichters eines Abgasturboladers verdichtete und dadurch erwärmte Luft zu kühlen ist. Zur Darstellung einer besonders einfachen Montage ist der Ladeluftkühler 26 in den Aufnahmeraum 24 des Ansaugmodul 10 eingeschoben. Dies bedeutet, dass sowohl die Zylinderkopfhaube 14, das Luftleitelement 12 sowie der Ladeluftkühler 26 in das Ansaugmodul 10 integriert sind. In das Ansaugmodul 10 ist ferner ein Ölabscheidbereich 28 zur Darstellung einer Ölabscheidung im Rahmen einer Kurbelgehäuseentlüftung integriert. Mittels der Kurbelgehäuseentlüftung wird sogenanntes Blow-by-Gas aus einem Kurbelgehäuse der Verbrennungskraftmaschine abgeführt. Das Blow-by-Gas ist dabei als ein Gemisch aus Öl und Gas gebildet. Der Ölanteil wird dabei wieder einem Ölkreislauf der Verbrennungskraftmaschine zugeführt, während der Gasanteil in einen Ansaugtrakt der Verbrennungskraftmaschine eingeleitet und so den Zylindern zugeführt wird. Zur Realisierung dieser getrennten Zuführung dient die Ölabscheidung mittels des Ölabscheidebereichs 28, durch welche der Ölanteil zumindest überwiegend von dem Gasanteil des Blow-by-Gases abgeschieden wird.

Dem Luftleitelement 12 ist ferner ein Anschlussstutzen 30 zugeordnet, über welchen die von dem Verdichter verdichtete und dadurch erwärmte Luft dem Aufnahmeraum 24 und somit dem Ladeluftkühler 26 zugeführt werden kann. Darüber hinaus umfasst das Luftleitelement 12 einen Ladeluftverteiler 32, mittels welchem die verdichtete Luft und mittels des Ladeluftkühlers 26 gekühlte Luft den Zylindern der Verbrennungskraftmaschine zuzuführen ist.

Insbesondere aufgrund der Integration des Luftleitelements 12, der Zylinderkopfhaube 14, des Ladeluftkühlers 26 und des Ölabscheidebereichs 28 in das Ansaugmodul 10 weist das Ansaugmodul eine hohe Funktionsintegration, einen sehr geringen Bauraumbedarf und ein geringes Gewicht auf. Das Ansaugmodul 10 kann dabei als Modulteil an dem Zylinderkopf befestigt werden, wobei mit dieser Befestigung zeitgleich die Befestigung des Luftleitelements 12, der Zylinderkopfhaube 14, des Ladeluftkühlers 26 und des Ölabscheidebereichs 28 einhergeht. So können die Montagekosten der Verbrennungskraftmaschine gering gehalten werden.

Das Ansaugmodul 10 stellt somit ein hochintegriertes Ansaugmodul 10 dar, welches insbesondere bei Verbrennungskraftmaschinen in Reihenbauweise vorteilhaft verwendet werden und die Bauraumbeanspruchung, insbesondere bei Reihenmotoren, in einem besonders geringen Rahmen halten kann.

Zur Verbindung des Gehäuseoberteils 18 mit dem Gehäuseunterteil 20 dienen Schrauben 34, welche jeweilige Durchgangsöffnungen des Gehäuseoberteils 18 und des Gehäuseunterteils 20 durchdringen und in den Zylinderkopf eingeschraubt werden. Mittels den Schrauben 34 wird das gesamte Ansaugmodul 10 an dem Zylinderkopf befestigt. Zur weiteren Verbindung des Ansaugmoduls 10 mit dem Zylinderkopf dienen weitere Schrauben 36, welche jeweilige Durchgangsöffnungen des Gehäuseunterteils 20 durchdringen. Ebenso ist es denkbar, dass das Gehäuseoberteil 30 mit dem Gehäuseunterteil 34 durch eine anders geartete Verschraubung, eine Verschweißung, eine Verklebung und/oder eine Vernietung miteinander verbunden sind, und/oder dass diese Teile zumindest teilweise einstückig miteinander ausgeführt sind.

Vorteilhafterweise sind eine erste Verbindungsflanschfläche, über die das Luftleitelement 12 bzw. das Saugrohr mit dem Zylinderkopf zu verbinden ist, und eine zweite Verbindungsflanschfläche, über die die Zylinderkopfhaube 14 mit dem Zylinderkopf zu verbinden ist, in einer zumindest im Wesentlichen gemeinsamen Ebene 38 angeordnet. Dadurch ist eine besonders einfache Montage- und Fertigungssituation des Ansaugmoduls 10 dargestellt.

### Bezugszeichenliste

- 10: Ansaugmodul
- 12: Luftleitelement
- 14: Zylinderkopfhaube
- 16: Luftkanal
- 18: Gehäuseoberteil
- 20: Gehäuseunterteil
- 22: Verbindungsflansche
- 24: Aufnahmeraum
- 26: Ladeluftkühler
- 28: Ölabscheidebereich
- 30: Anschlussstutzen
- 32: Ladeluftverteiler
- 34: Schraube
- 36: Schraube
- 38: Ebene

## Patentansprüche

1. Ansaugmodul (10) für eine Verbrennungskraftmaschine, insbesondere eines Kraftwagens, mit wenigstens einem Luftleitelement (12), über welches der Verbrennungskraftmaschine Luft zuzuführen ist, und mit einer mit dem Luftleitelement (12) verbundenen Zylinderkopfhaube (14), mittels welcher ein Zylinderkopf der Verbrennungskraftmaschine zumindest teilweise abzudecken ist,
**dadurch gekennzeichnet, dass**
in das Ansaugmodul (10) eine Schmiermittelabscheideeinrichtung (28) und eine Kühleinrichtung (26) zur Kühlung der Luft integriert sind.

2. Ansaugmodul (10) nach Anspruch 1,
**dadurch gekennzeichnet, dass**
eine erste Verbindungsflanschfläche des Luftleitelements (12), über welche das Luftleitelement (12) mit dem Zylinderkopf zu verbinden ist, und eine zweite Verbindungsflanschfläche der Zylinderkopfhaube (14), über welche die Zylinderkopfhaube (14) mit dem Zylinderkopf zu verbinden ist, zumindest im Wesentlichen in einer gemeinsamen Ebene (38) angeordnet sind.

3. Ansaugmodul (10) nach einem der Ansprüche 1 oder 2,
**dadurch gekennzeichnet, dass**
das Luftleitelement (12) einen Luftverteiler (32) umfasst, mittels welchem die Luft auf eine Mehrzahl von Brennräumen der Verbrennungskraftmaschine aufteilbar ist.

4. Ansaugmodul (10) nach einem der vorhergehenden Ansprüche,
**dadurch gekennzeichnet, dass**
die Kühleinrichtung (26) in einem teilweise durch das Luftleitelement (12) und teilweise durch die Zylinderkopfhaube (14) begrenzten Aufnahmeraum (24) angeordnet ist.

5. Ansaugmodul (10) nach einem der vorhergehenden Ansprüche,
**dadurch gekennzeichnet, dass**
wenigstens eine Luftleitung (16), über welche der Verbrennungskraftmaschine die Luft zuführbar ist, teilweise durch das Luftleitelement (12) und teilweise durch die Zylinderkopfhaube (14) begrenzt ist.

6. Ansaugmödul (10) nach einem der vorhergehenden Ansprüche,
**dadurch gekennzeichnet, dass**
die Kühleinrichtung (26) in seiner Längsrichtung in das Ansaugmodul (10) eingeschoben ist.

7. Anordnung nach einem der vorhergehenden Ansprüche,
**dadurch gekennzeichnet, dass**
Teile des Gehäuses, insbesondere das Gehäuseoberteil mit dem Gehäuseunterteil durch eine Verschraubung, Verschweißung, Verklebung und/oder eine Vernietung miteinander verbunden sind, und/oder dass diese Teile zumindest teilweise einstückig miteinander ausgeführt sind.

8. Verbrennungskraftmaschine mit einem Ansaugmodul (10) nach einem der vorhergehenden Ansprüchen.

## Claims

1. Intake module (10) for an internal combustion engine, in particular of a motor vehicle, comprising at least one air duct element (12), via which air is supplied to the internal combustion engine, and a cylinder head cover (14), which is connected to the air duct element (12) and by means of which a cylinder head of the internal combustion engine can be at least partially covered,
**characterised in that**
a lubricant separation device (28) and a cooling device (26) for cooling the air are integrated into the intake module (10).

2. Intake module (10) according to claim 1,
**characterised in that**
a first connecting flange surface of the air duct element (12), via which the air duct element (12) can be connected to the cylinder head, and a second connecting flange surface of the cylinder head cover (14), via which the cylinder head cover (14) can be connected to the cylinder head, are at least substantially arranged in a common plane (38).

3. Intake module (10) according to claim 1 or 2,
**characterised in that**
the air duct element (12) comprises an air distributor (32), by means of which the air can be divided among a plurality of combustion chambers of the internal combustion engine.

4. Intake module (10) according to any of the preceding claims,
**characterised in that**
the cooling device (26) is located in a reception chamber (24), which is bounded partially by the air duct element (12) and partially by the cylinder head cover (14).

5. Intake module (10) according to any of the preceding claims,
**characterised in that**
at least one air line (16), via which the air can be supplied to the internal combustion engine, is bounded partially by the air duct element (12) and partially by the cylinder head cover (14).

6. Intake module (10) according to any of the preceding claims,
**characterised in that**
the cooling device (26) is inserted into the intake module (10) in its longitudinal direction.

7. Intake module (10) according to any of the preceding claims,
**characterised in that**
parts of the housing, in particular the housing top part and the housing bottom part, are joined to one another by bolting, welding, bonding and/or riveting, and/or **in that** these parts are at least partially formed as a single piece.

8. Internal combustion engine comprising an intake module (10) according to any of the preceding claims.

## Revendications

1. Module d'aspiration (10) pour un moteur à combustion interne, notamment d'un véhicule à moteur, comportant au moins un élément de conduite d'air (12) destiné à l'alimentation en air du moteur à combustion interne, et un couvercle supérieur des soupapes (14) relié à l'élément de conduite d'air (12), au moyen duquel une culasse de cylindre du moteur à combustion interne est au moins partiellement recouverte, **caractérisé en ce qu'**un dispositif de séparation de lubrifiant (28) et un dispositif de refroidissement (26) destiné à refroidir l'air sont intégrés dans le module d'aspiration (10).

2. Module d'aspiration (10) selon la revendication 1, **caractérisé en ce qu'**une première face de bride de liaison de l'élément de conduite d'air (12), laquelle permet de relier l'élément de conduite d'air (12) à la tête de culasse, et une seconde face de bride de liaison du couvercle supérieur des soupapes (14), laquelle permet de relier le couvercle supérieur des soupapes (14) à la culasse de cylindre, sont disposées au moins essentiellement dans un plan commun (38).

3. Module d'aspiration (10) selon l'une quelconque des revendications 1 ou 2, **caractérisé en ce que** l'élément de conduite d'air (12) comprend un diffuseur d'air (32) qui permet de répartir l'air sur une pluralité de chambres de chauffe du moteur à combustion interne.

4. Module d'aspiration (10) selon l'une quelconque des revendications précédentes, **caractérisé en ce que** le dispositif de refroidissement (26) est disposé dans un espace de réception (24) délimité en partie par l'élément de conduite d'air (12) et en partie par le couvercle supérieur des soupapes (14).

5. Module d'aspiration (10) selon l'une quelconque des revendications précédentes, **caractérisé en ce qu'**au moins une conduite d'air (16) qui permet d'alimenter en air le moteur à combustion interne, est délimitée en partie par l'élément de conduite d'air (12) et en partie par le couvercle supérieur des soupapes (14).

6. Module d'aspiration (10) selon l'une quelconque des revendications précédentes, **caractérisé en ce que** le dispositif de refroidissement (26) est introduit par glissement dans sa direction longitudinale dans le module d'aspiration (10).

7. Agencement selon l'une quelconque des revendications précédentes, **caractérisé en ce que** des parties du carter, notamment la partie supérieure du carter, sont reliées à la partie inférieure du carter par vissage, soudage, collage et/ou par rivure l'une à l'autre, et/ou **en ce que** lesdites parties sont conçues au moins en partie d'un seul tenant.

8. Moteur à combustion interne doté d'un module d'aspiration (10) selon l'une quelconque des revendications précédentes.
